Europäisches Patentamt

European Patent Office

Office européen des brevets

(11) Veröffentlichungsnummer: **0 019 871**
**B1**

(12) **EUROPÄISCHE PATENTSCHRIFT**

(45) Veröffentlichungstag der Patentschrift:
**18.04.84**

(51) Int. Cl.³: **G 01 N 21/03**

(21) Anmeldenummer: **80102879.6**

(22) Anmeldetag: **23.05.80**

(54) **Küvette für optische Untersuchungen von Flüssigkeiten.**

(30) Priorität: **02.06.79 DE 2922697**

(43) Veröffentlichungstag der Anmeldung:
**10.12.80 Patentblatt 80/25**

(45) Bekanntmachung des Hinweises auf die Patenterteilung:
**18.04.84 Patentblatt 84/16**

(84) Benannte Vertragsstaaten:
**AT BE CH DE FR GB IT LI NL SE**

(56) Entgegenhaltungen:
**CH - A - 493 834**
**DE - B - 2 508 527**
**DE - U - 7 638 653**

(73) Patentinhaber: **HOECHST AKTIENGESELLSCHAFT,
Postfach 80 03 20, D-6230 Frankfurt am Main 80 (DE)**

(72) Erfinder: **Gross, Jürgen, Dr., Frankfurter Strasse 4,
D-6238 Hofheim am Taunus (DE)**

Küvette für optische Untersuchungen von Flüssigkeiten

Die Erfindung bezieht sich auf eine Küvette für optische Untersuchungen von Flüssigkeiten, insbesondere für Untersuchungen mit Laserlicht.

Nach der deutschen Patentschrift DE-C-2 508 527 sind Küvetten aus Kunststoff oder Glas mit quaderförmigem Hohlraum für zu untersuchende Flüssigkeiten bekannt. Bei Verwendung von Laserlicht wird vom Lichtstrahl nur ein kegelstumpfförmiges Teilvolumen dieses Hohlraumes mit dem Lichtstrahl als Symmetrieachse ausgeleuchtet. Ein beträchtliches Teilvolumen ist für die optische Messung also überflüssig. Zur Aufnahme in die quadratische Apparatehalterung sind die bekannten Küvetten mit Rippen versehen, die parallel zu den durchstrahlten Wänden verlaufen. Durch die einstückige Verbindung der Rippen mit den Wänden ist eine Schlieren- und/oder Riffelbildung in den durchstrahlten Wänden nicht zu vermeiden. Diese Schlieren und/oder Riffel wirken sich nachteilig auf die optische Messung aus.

Es besteht demnach die Aufgabe, eine Küvette der eingangs genannten Art zu schaffen, bei der der Hohlraum zur Aufnahme der zu untersuchenden Flüssigkeit dem Strahlenverlauf des verwendeten Lichtes angepasst ist und bei dem die Rippen so ausgebildet sind, dass Schlieren und/oder Riffel in den durchstrahlten Wänden im Bereich des Strahlendurchtritts vermieden werden.

Erfindungsgemäss wird die Aufgabe durch eine Küvette gelöst, die aus einem Boden und vier Seitenwänden besteht, von denen zwei gegenüberliegende, durchsichtige und ebene Stirnwände bilden, die parallel zueinander verlaufen und mit ihren Aussenseiten in vorbestimmtem Abstand voneinander liegen, während die beiden anderen Seitenwände einen geringeren Abstand voneinander haben und an ihren Aussenseiten je zwei Rippen tragen, die parallel zu den durchsichtigen Wänden verlaufen und mit deren Aussenseiten fluchten, und die dadurch gekennzeichnet ist, dass der Boden rinnenförmig ausgebildet ist und halbkreisförmige Stirnflächen aufweist, die jeweils von einem entsprechend geformten Bereich der Stirnwände gebildet sind, und dass die Rippen zum Vermeiden einer seitlichen Verbindung mit dem Boden in den an den Boden angrenzenden Bereichen jeweils mit einer Ausnehmung versehen sind.

In einer besonderen Ausführungsform der Küvette weisen die Stirnflächen des Bodens unterschiedliche Querschnitte auf.

Die erfindungsgemässe Küvette wird im folgenden anhand der lediglich ein Beispiel darstellenden Figur näher erläutert: Eine Küvette aus Kunststoff oder Glas für optische Untersuchungen kleiner Flüssigkeitsmengen besitzt einen wannenförmigen Boden 6, dessen Stirnflächen 5 halbkreisförmigen Querschnitt aufweisen, und vier von diesem ausgehende Wände, von denen zwei gegenüberliegende, durchsichtige Stirnwände 2 bilden und parallel zueinander liegen, während die beiden anderen Seitenwände 7 zur Verringerung der zur Untersuchung erforderlichen Flüssigkeitsmenge einen geringeren Abstand haben. Über dem so gebildeten für die zu untersuchende Flüssigkeit bestimmten Hohlraum ist ein aus den Wänden 1 gebildeter Schacht mit quadratischem Querschnitt angeordnet, der über einen aus den Wänden 4 gebildeten Trichter mit dem Hohlraum verbunden ist. In einer besonderen Ausführungsform hat der wannenartige Boden die Gestalt eines halbierten Kegelstumpfes. Eine Küvette mit einem so gestalteten Boden besitzt bei gleichen optischen Eigenschaften ein bis zu ca. 40% kleineres Volumen als Küvetten nach dem Stand der Technik. Darüber hinaus fördert ein derart gestalteter Boden die Durchmischung von nacheinander eingegebenen Flüssigkeiten, wie es z.B. bei der Bestimmung der Konzentration von Antigenen in Lösung durch Präzipitatbildung mit Hilfe des korrespondierenden Antikörpers der Fall ist.

Eine zusätzliche Verbesserung der optischen Qualität der erfindungsgemässen Küvette im Bereich der durchsichtigen Stirnflächen 5 des Bodens 6 wird durch zusätzliche Ausnehmungen 8 in den Rippen 3 der Küvette erreicht. Da in diesem Bereich der Küvette dann nur zwei Flächen aneinander grenzen, wird eine störende Schlieren- und/oder Riffelbildung auf den durchsichtigen Stirnflächen 5 und Teilen der Stirnwände 2 vermieden.

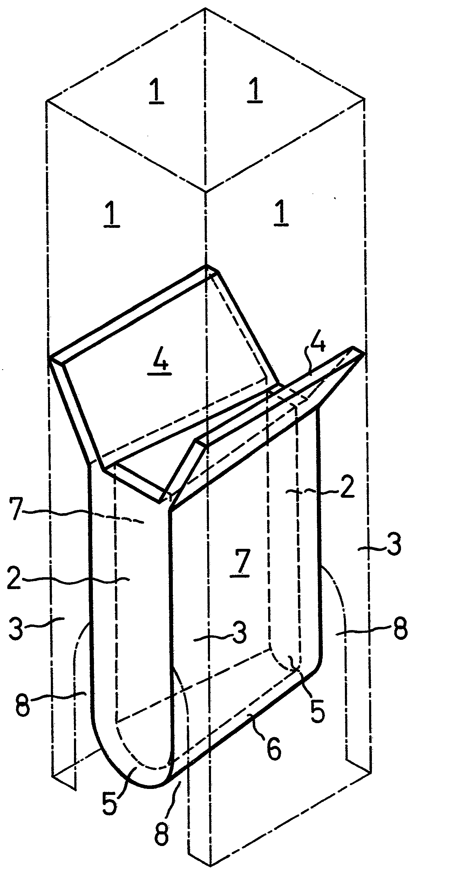

## Patentansprüche

1. Küvette für optische Untersuchungen kleiner Flüssigkeitsmengen, bestehend aus einem Boden (6) und vier Seitenwänden, von denen zwei gegenüberliegende, durchsichtige und ebene Stirnwände (2) bilden, die parallel zueinander verlaufen und mit ihren Aussenseiten in vorbestimmtem Abstand voneinander liegen, während die beiden anderen Seitenwände (7) einen geringeren Abstand voneinander haben und an ihren Aussenseiten je zwei Rippen (3) tragen, die parallel zu den durchsichtigen Stirnwänden verlaufen und mit deren Aussenseiten fluchten, dadurch gekennzeichnet, dass der Boden (6) rinnenförmig ausgebildet ist und halbkreisförmige Stirnflächen (5) aufweist, die jeweils von einem entsprechend geformten Bereich der Stirnwände (2) gebildet sind, und dass die Rippen (3) zum Vermeiden einer seitlichen Verbindung mit dem Boden (6) in den an den Boden angrenzenden Bereichen jeweils mit einer Ausnehmung (8) versehen sind.

2. Küvette nach Anspruch 1, dadurch gekennzeichnet, dass die Stirnflächen (5) des Bodens unterschiedliche Querschnitte aufweisen.

## Claims

1. Cuvette for the optical examination of small amounts of liquids comprising a bottom (6) and four side-walls, two of which being opposite, transparent and level front walls (2) in parallel position to each other, the outer faces thereof having a defined distance from each other, while the other two side-walls (7) are spaced at a smaller distance from each other and provided at their outer face with two ribs (3) each positioned parallelly to the transparent front walls (2) and aligning with the outer faces of the front walls, wherein the bottom (6) has the shape of a channel and semicircular front surfaces (5) which are formed in each case of a correspondingly shaped area of the front walls (2), and wherein the ribs (3) have recesses (8) in the area adjacent to the bottom for preventing lateral connection with the bottom (6).

2. The cuvette as claimed in claim 1, wherein the front surfaces (5) of the bottom have diverse cross-sections.

**Revendications**

1. Cuve pour analyse optique de faibles quantités de liquide, se composant d'un fond (6) et de quatre parois latérales, dont deux forment des parois frontales (2), opposées, transparentes et planes, parallèles l'une à l'autre et dont les faces extérieures se trouvent à une certaine distance prédéterminée l'une de l'autre, tandis que les deux autres parois latérales (7) sont à une distance plus faible l'une de l'autre et portent chacune, sur leurs faces extérieures deux nervures (3), parallèles aux parois frontales transparentes et en alignement avec leurs faces extérieures, caractérisée en ce que le fond (6) a la forme d'une gouttière et présente des surfaces frontales semicirculaires (5), formées chacune par une zone, formée en conséquence, des parois frontales (2), et que les nervures (3) sont chacune pourvue, pour éviter une liaison latérale avec le fond (6), d'un évidement (8) dans les zones contiguës au fond.

2. Cuve selon la revendication 1, caractérisée en ce que les surfaces frontales (5) du fond ont des sections différentes.